# EUROPEAN PATENT SPECIFICATION

(11) **EP 0 767 551 B1**
(45) Date of publication and mention of the grant of the patent: **28.08.2002**
(21) Application number: 96850155.1
(22) Date of filing: 20.09.1996
(51) Int. Cl.: H04B 7/26

(54) **Method to increase capacity in DECT**
Verfahren zur Kapazitätserhöhung in DECT
Méthode pour augmenter la capacité dans un système DECT

(30) Priority: 02.10.1995 SE 9503386
(43) Date of publication of application: 09.04.1997
(73) Proprietor: TELIA AB, 126 80 Farsta (SE)
(72) Inventor: Olanders, Peter, 234 33 Lomma (SE)
(74) Representative: Karlsson, Leif Karl Gunnar

(56) References cited:
- WO-A-93/20624
- WO-A-94/26040

## Description

### TECHNICAL FIELD

The present invention relates to a method and a device to considerably increase the capacity in a DECT-system by extending its frequency range.

### PRIOR ART

DECT (Digital European Cordless Telecommunication) has today a pan-European frequency allocation between 1880 and 1900 MHz. In this band DECT shall (according to EU directives and CEPT-recommendations) have higher priority than all other services. The DECT-standard gives in this band a capacity of at least 10 000 Erlang/km²/floor, which is a very high capacity in comparison with both mobile telephony, which usually has a capacity of 100 Erlang/km²/floor, and customary PABXes.

DECT is however intended for both speech and data, where the dataservices can consume a large part of the capacity, since DECT's data capacity is comparatively high. An individual user can be allotted up to about 500 Kbit/s without special arrangements. This bit-rate corresponds to that the user occupates 23 time slots or about 10% of DECT's capacity. To this category also the use of DECT as carrier of ISDN (Integrated Services Digital Network) can be counted, since this requires high data capacity and consequently utilizes considerably larger bandwidth than simple 3,1 kHz telephony. The high capacity is calculated for a dense environment, such as for instance office environment with very small cells, which can have a radius of about 20-30 m. In more open environments it can be comparatively uneconomical with small cells, at the same time as high capacity is wanted.

There accordingly is a strong need to try to extend DECT's frequency range. Frequency allocating authorities are however comparatively reluctant to such an extension, because other systems are already occupying adjacent frequency bands.

There is however a possibility to use the general ISM-band on 2,4 GHz, where 83,5 MHz can be used provided that certain specific conditions are observed (ISM means Industry, Science and Medicine and this frequency band is intended for a great variety of different radio systems).

A co-utilization of the ISM-band with DECT becomes extra interesting when this gives a possibility to use the band for speech services. The conditions for the ISM-band generally means that the band can be used for a multiple of different purposes at the same time, such as for instance door openers, microwave ovens, data services etc. The consequence of this is that a user unannounced can be affected by strong disturbances which will reduce the accessibility/capacity.

A co-utilization of the DECT-bands and the ISM-bands can bring about that the user can "escape" back to the "safe" DECT-band when strong disturbances occcur on the ISM-band. In this way also the ISM-band can be used for speech-based services, which is not possible with a system which only has the ISM-band at hand.

Co-utilization of frequency bands is not quite new and it has been discussed and standardization is going on that GSM (900) and DCS1800 shall have possibility to co-operate closely with the handover-systems.

At use of DECT at the 2,4 GHz-band there will however arise a number of complicated problems. One problem is that the ISM-band is used for a great variety of different communication services, which may result in that DECT-transmissions will interfere with other transmissions.

Another difficult problem is to adapt DECT according to the conditions which are indicated in the standard ETS 300 328.

'These problems and further problems which will arise at co-utilization of the DECT-band (1800 MHz-band) and the ISM-band (2,4 GHz-band) will be carefully analysed in the following description.

At a preliminary examination which was performed to find out whether the previous technology describes co-utilization of the DECT-band and the ISM-band and solves above said problems the following documents were found.

The document WO,A1,92/4 796 shows a cordless telephone system. The system which is a CT-2-system which utilizes an ISM frequency band for communication in business environment and home environment. Communication via "telepoints" utilizes the same frequency band as the cellular mobile telephone system. The ISM-band which is discussed in the document is on 902-928 MHz. The transmission protocol is "spread spectrum".

The document US,A,5 115 463 describes an extended system for cordless telephony. This system utilizes parts of the 900-928 MHz-band to obtain further channels.

The document US,A,5 025 452 shows a communication system which among other things is intended to utilize the ISM-band 2400-2483,5 MHz. The system offers full duplex communication by using "spread spectrum" in selected "sub-bands" of the ISM-bands.

The documents US,A,5 218 630; WO,A1,95/1 039 and WO,A1,93/20 624 show different ways to expand the utilized frequency band for a cordless telephone system. The documents relate to CT-2 (the second generation cordless telephones).

These documents accordingly do not describe any DECT-systems which have been extended with the ISM-band, and solutions of the above indicated problems which will arise at this extension are consequently not indicated.

### SUMMARY OF THE INVENTION

The aim with the present invention is to considerably increase the capacity in a DECT-system by utilizing the ISM-band (2,4 GHz-band) and remove the above described problems which arise at a utilization at the same time of the DECT-band and the SIM-band.

This aim is achieved by a method in a digital communication system such as DECT by that DECT in addition to the DECT-band (1880-1900 MHz) at the same time utilizes the ISM-band on 2,4 GHz for transmission of information, and that a time slot in DECT's frequency time slot structure on the 1880 MHz-band gets a special function which results in that when a base station at the scanning of channels reaches said time slot, a scanning etc starts within the 2,4 GHz-band, and if the dynamic channel allocation algorithm (DCA) chooses to use said time slot, base station and portable will switch to the 2,4 GHz-band, and that a time slot in the 2,4 GHz-band in a corresponding way functions as communication link towards the 1800 MHz-band, at which if the dynamic channel allocation algorithm (DCA) chooses to use this time slot, the base station and portable will switch to the 1800 MHz-band.

The invention will now be described in more details below with references to the enclosed drawings.

### BRIEF DESCRIPTION OF THE DRAWINGS

Figure 1 shows normal dynamic channel allocation (DCA) in DECT.

Figure 2 shows how a time slot i the 1,8 GHz-band can function as opening towards a time slot in the 2,4 GHz-band.

Figure 3 shows how a frequency block wanders in frequency on the ISM-band whereas channel numbering etc is retained.

### DETAILED DESCRIPTION OF THE INVENTION

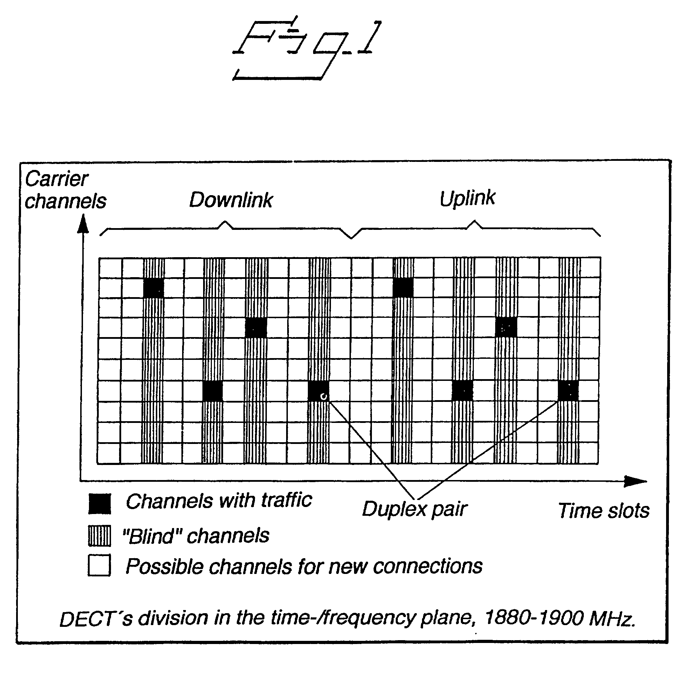

In the following is given a brief description of dynamic channel allocation in DECT with reference to Figure 1. After that a general presentation of the ISM-band with its main alternatives FHSS (Frequency Hopping Spread Spectrum) and DSSS (Direct Sequence Spread Spectrum) follows before a deeper analysis of the present invention is presented.

### Frequency use in DECT

Dynamic Channel Allocation (DCA) has become extremely effective in DECT. Channel allocation is primarily controlled by the portables which chooses best accessible channel in the frequency plane and the time plane. DECT's normal channel allocation is illustrated by the matrix in Figure 1.

As can be seen in Figure 1, there are 10 accessible channels in the frequency interval 1880-1900 MHz, which each has a bandwidth of 1,728 MHz. Each frame which has a time length of 10 ms is divided into 24 time slots where 12 time slots are used in the direction from base station to portable (downlink) and the remaining time slots from portable to base unit (uplink).

In Figure 1 can also be seen how a portable can scan the time plane and the frequency plane to get an overview over accessible channels and time slots and the quality of these seen from the portable's perspective. In the simplest scenario the portable uses one time slot per frame, and the base station (actually RFP, Radio Fixed Part) contains only one radio unit. During the time slots the portable is not active (for instance 11 of 12) it scans the ten accessible carrier frequencies; maximal number of carrier frequencies consequently is less than maximal number accessible time slots.

The advantages with DCA are many; among other things no frequency planning is needed and the capacity is directed to where it is needed.

In Europe DECT has got a pan-European frequency allocation (1800-1900 MHz) which DECT's DCA is especially adapted for.

### General about the ISM-band

ETSI has in the standard "Wireless Wideband Data" (ETS 300 328) defined the demands for using the ISM-band on 2,4 GHz (83,5 MHz is at hand). One of the fundamental demands in the standard is that "spread spectrum"-technology is applied, however with a very broad interpretation. The first products which follow this standard have already been put on the market (by for instance NCR), and more are expected within short.

As has previously been mentioned, there is an interest in extending DECT to above said frequency range. This would in that case demand that DECT must fulfil the demands in ETS 300 328.

Conditions for use of the 2,4 GHz-band according to ETS 300 328 are summed up below. The standard describes two main alternatives:
* FHHS, i.e. Frequency Hopping Spread Spectrum, which is a frequency hopping variant with a maximal output power of -10 dBW (100 mW) per 100 kHz.
* DSSS, i.e. Direct Sequence Spread Spectrum with a maximal output power of -20 dBW (10 mW) per 1 MHz.

The indicated channel widths also relate to the width of the measurement window; for both cases apply that the total integrated outpout power in frequency is maximized to 100 mW. Both methods are comparatively broad-band, even if this is not directly specified.

FHSS and DSSS in ETS 300 328 can be said to describe methods for co-existence with another use of the 2,4 GHz-band, either by a frequent jumping in frequency (FHSS) in a way that the disturbance from other systems is restricted in time and frequency, or by "spreading out" a lower output power over a larger area in the time and frequency plane in such a way that the "disturbance" lands up below the "noise floor".

It is known that authorities have permitted use of the ISM-band with higher output powers than what is indicated in ETS 300 328. Such a permission probably requires that it is possible to show that the used equipment will not considerably (for instance during a longer period) disturb other equipment which also utilizes the ISM-band. This speaks in favour of FHSS where the disturbance on each frequency becomes of comparatively short duration. DSSS with "higher" output power might result in an unacceptable high noise level and the probability for that frequency allocating authorities would allow this can from this perspective be expected to be somewhat less.

To the demands above can be added the general demand for an intended data-rate per channel that shall exceed 422 Kbit/s. DECT's corresponding data-rate is 1137,6 Kbit/s (as it is used on the DECT-band), which by the way is of the same magnitude as commercial products according to ETS 300 328 have.

### DECT-use of the ISM-band with FHSS

The most important advantage with frequency jump (FHSS) is probably the according to the standard maximally allowed output power. With retaining of the channel width of DECT (1,7 MHz), the output power should be 100 mW per frequency channel (compared with the output power in the DECT-band of max. 250 mW, or with DSSS on 2,4 GHz which maximally allows about 20 mW). The demands which are stated in ETS 300 328 are:
a At least 20 separate channels shall be available. In the standard the word channel is connected to frequency and any division in time is not presupposed, but is neither prohibited.
b Maximal "dwell time" is 0,4 seconds. With this is meant the period of time that a channel, i.e. frequency, is occupied by a user.
c Each accessible channel shall be used at least once during a period of time of 4 x dwell time x the number of channels. The standard says nothing about that the channel must be used if it is disturbed or is used by other users. It is reasonable to suppose that this is not a demand.

### DECT-use of the ISM-band with DSSS

The description of DSSS and the belonging conditions is extremely scant in ETS 300 328. In the standard is stated that everything which do not fulfil the conditions for FHSS is classified as DSSS. There is however CEPT-recommendations for the 2,4 GHz-band which may make increased demands upon "spread spectrum"-products. DSSS in the 2,4 GHz-band is in other words a "grey zone", and may be subject to national examination.

If one confine oneself to follow ETS 300 328, DECT's access method can be classified as DSSS where output power and frequency range are the only adjustments that are necessary.

### TECHNICAL PROBLEMS

If DECT is used on the 2,4 GHz-band a number of problems, as have previously been mentioned, will arise and which all must have some kind of solution. Below the most important problems are listed:
1. The ISM-band is used for a wide spectrum of other services and systems. In this band there are systems for datacommunication but also quite different applications such as for instance microwave ovens. This results in that extensive interference may occur locally in time, frequency or room, or within large parts of the band.
2. The DCA-function shall be retained to largest possible extent, among other things to rapidly and in a simple way find undisturbed channels. Preferably DCA shall function both within each band and between the bands (1,8 and 2,4 GHz).
3. The general demand in the 2,4 GHz-band on frequency jump can "destroy" the dynamic channel allocation (i.e. reduce its function).
4. The changes shall be as small as possible, and the DECT-stack shall be on the whole unchanged. This for cost reasons, technical reasons and to allow an integrated use of the two bands. A consequence of this will at that be that the time slot structure with the same parameters and values should be retained also in the 2,4 GHz-band.
5. If the whole frequency range on 2,4 GHz and possibly also 1,8 GHz shall be included in an extended DCA, then about 105 MHz (20 MHz + 83,5 MHz) shall be surveyed and handled dynamically, which makes higher demands on speed in the base station (about 10 times faster than if only the 1,8 GHz-band is used).
6. The necessary demands in the standard ETS 300 328 shall be fulfilled.

### DESCRIPTION OF THE INVENTION

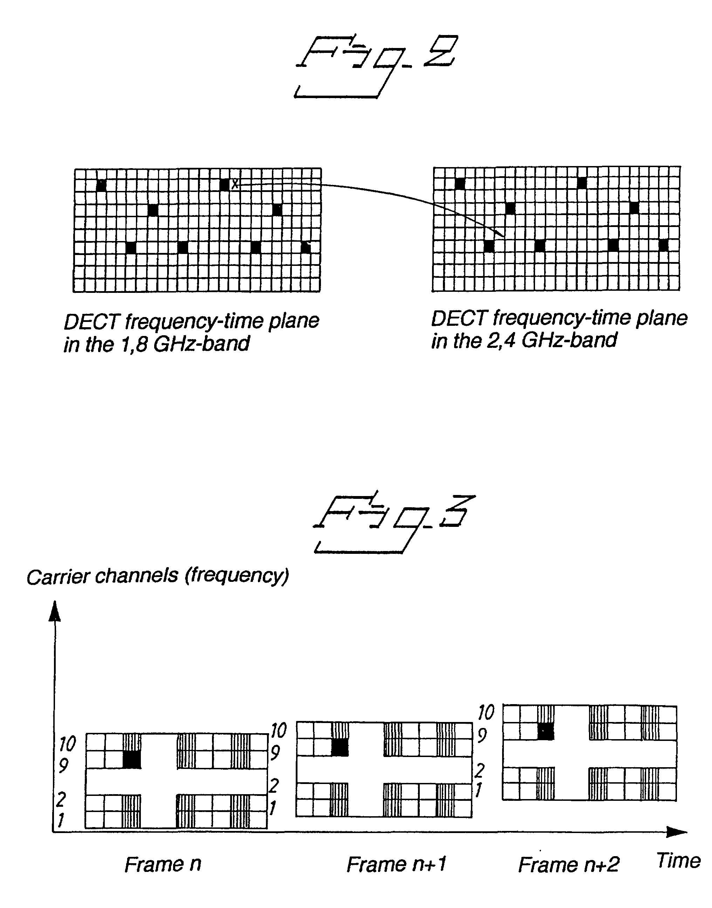

The above described technical problems will now be solved in connection with that the invention is described in detail with reference to the Figures 2 and 3.

The problems 1 and 2 above are solved by the creation of a possibility to dynamical jump between the DECT-band and the ISM-band. The control of this jump is made in the same way as the allocation within the 1,8 GHz-band, i.e. the DCA-algorithm is used. One of the 120 time slots (virtual or real) in DECT's frequency time slot structure on the 1,8 GHz-band as can be seen in Figure 2 gets a special function; it opens the door to the 2,4 GHz-range. When the base station at a channel scannning reaches this slot, scanning etc starts within the 2,4 GHz-range. If the DCA chooses to use this time slot, then base and portable switch themselves to the 2,4 GHz-band and a corresponding (real or virtual) time slot in the 2,4 GHz-band functions as "peephole" in to the 1,8 GHz-band. When the DCA feels that the disturbances are too strong on the 2,4 GHz-band, the DCA utilizes this "peephole" time slot in the 2,4 GHz-band to transfer the transmission to the 1800 MHz-band.

As has previously been mentioned DECT fulfils the DSSS-demands in ETS 300 328 if only the output power and the frequency is adjusted. However, FHSS has certain advantages, especially the higher output power which gives a better coverage. The demands for FHSS are however difficult to fulfil.

Both for DSSS and FHSS the 2,4 GHz-band is in the present invention divided into a number of blocks which each corresponds to DECT's division on the 1,8 GHz-band. Each block by that gets a bandwidth of 20 MHz, and there are room for four such blocks on the 2,4 GHz-band.

Since DECT at use of the ISM-band in principle already fulfils the DSSS-demands in ETS 300 328, the adjustment to the FHSS-conditions will now be described.

In each DECT-block of 20 MHz, 10 frequency channels with a bandwidth of about 1,7 MHz each is provided. In the ISM-band which has a bandwidth of 83,5 MHz, there is consequently room for four such DECT-blocks, which leads to that the number of accessible channels are four blocks x 10 channels per block = 40 channels. The demand in FHSS that there shall be at least 20 separate accessible channels is accordingly fulfilled.

As is shown in Figure 3 the used frequency block moves for each DECT-frame with a frame cycle time of 10 ms one frequency channel on the ISM-band. Easiest is to imagine that this transfer is made to next (for instance higher) frequency, but is possible to use other algorithms for this. In this transfer all channels are renumbered so that the DECT-equipment for the most part handles the block as if it were fixed in frequency. The frequency block is consequently transferred, but this is not "noted" by the whole DECT-equipment. By that the allocation function DCA is retained within the block at the same time as dwell time becomes maximally 0,1 seconds; the frame cycle time is 10 ms and the number of frequency channels is 10 which results in that it totally takes 100 ms to transfer the block a whole step. By that the demand in the FHSS that the dwell time is allowed to be maximally 0,4 seconds is fulfilled.

In FHSS further every accessible channel shall be used at least once during a time period of 4 x dwell time x the number of channels. This period of time is according to what has been mentioned above 16 seconds with a dwell time of 0,1 seconds and with 40 channels. As has been described above, each channel is gone through with a period time of 0,1 seconds x 40 = 4 seconds, by which also this demand is fulfilled.

The dynamic channel allocation (DCA) can at such a transfer of blocks as has been described above detect that the new frequency channel is no longer sufficiently good. A new channel will then be chosen and it is possible for the DCA to choose a channel with lower frequency, i.e. the DCA can to some extent counteract the demand for going through all channels and to some extent dwell time. With the rapid transfer of the block, the limits will never be exceeded and only disturbances on the band results in transfers.

As a conclusion can be said that the problems 2-6 above are solved as has been described above by adapting DECT for transmission on the ISM-band according to the demands which are indicated in ETS 300 328 and divide FHSS and DSSS into a number of blocks which each corresponds to DECT's division on the 1800 MHz-band, and that for each DECT-frame the utilized block moves one frequency channel on the ISM-band, at which all channels in this transfer are renumbered so that the DECT-equipment for the most part handles the block as if it were fixed in frequency by which the allocation function DCA can be retained within the block.

The above described method with in frequency "wandering blocks" can be completed with handling of the problem when large parts of the 2,4 GHz-band in practice is blocked by other use, which by DECT is experienced as disturbances.

To some extent DECT's DCA itself solves this problem when a block wanders into a range with disturbances. The DCA then looks for other free and better slots, which sooner or later results in that the DCA finds the slot which leads to the 1,8 GHz-band. The large blocks with disturbances should however be avoided to increase the quality and reduce the efforts of the DCA.

In the present invention the results of the scanning which the DCA performs therefore are systematically registered, and when a number of consecutive channels have been registered with high interference level, this is used either to jump back to the 1,8 GHz range and/or let the whole block transfer for instance one block length in the frequency plane.

Another refinement of the criterion for such thorough activity can be achieved by deriving the disturbance level with regard to the frequency or time; positive derivata indicate that disturbances will increase "further on". This refinement is probably not suitable to use separately but should be combined with the absolute amount of the disturbances (the correspondning is usual within automatic engineering).

The frequency ranges which contain big disturbances then can be labelled as "bad ranges" which are avoided during a restricted time. For instance can a controllable timer be used where the restricted time can be a few seconds or a few minutes, which periods of time are typical for the duration of disturbances on the ISM-band.

What has been described above leads to that communication between base station and portable can be made without disturbances in the same time frame both on the DECT-band and the ISM-band if there is need for such capacity. An example of control is to normally allow data traffic to be on the 2,4 GHz-band and speech traffic on the 1,8 GHz-band.

The present invention is at first hand intended to be used to considerably increase the capacity in DECT-systems. It can be used within all the fields of use of DECT (companies, public, private and in local networks). The invention is probably of most interest in connection with companies and local networks.

What has been described above is only to be regarded as embodiments of the present invention and the scope of protection of the invention is only restriced by what is indicated in the enclosed patent claims.

## Claims

1. Method to increase the transmission capacity in a digital communication system such as DECT, which in addition to the DECT-band of 1880-1900 MHz at the same time utilizes the ISM-band on 2,4 GHz for transmisssion of information, and that a time slot in DECT's time slot structure gets a special function which results in that when a base station at a channel scanning reaches said time slot, a scanning etc starts within the ISM-band and if one for DECT intended dynamic channel allocation algorithm "DCA" chooses to use this time slot, then the base station and portable will switch themselves for transmission on the ISM-band, and that a time slot in the ISM-band in corresponding way functions as communication link towards the 1800 MHz-band, at which if the dynamic channel allocation algorithm "DCA" chooses to utilize this time slot, base station and portable switches themselves to transmission on the 1800 MHz-band.

2. Method according to patent claim 1, **characterized in that** the DCA chooses to utilize said time slot on the DECT-band if communication shall be performed on both frequency bands.

3. Method according to patent claim 1, **characterized in that** the time slot which functions as communication link from the ISM-band to the DECT-band is either virtual or real.

4. Method according to patent claim 1, **characterized in that** the time slot which functions as communication link from the DECT-band to the ISM-band is either virtual or real.

5. Method according to patent claim 1, **characterized in that** base station is a Radio Fixed Part "RFP".

6. Method according to patent claim 2, **characterized in that** the communication between base station and portable is performed on both frequency bands at the same time during the same time frame.

7. Method according to patent claim 6, **characterized in that** a control of the communication traffic is attended to by the DCA by that data traffic normally is transmitted on the 2,4 GHz-band and speech traffic on the 1,8 GHz-band.

8. Method according to patent claim 2, **characterized in that** the dynamic channel allocation algorithm "DCA" can choose to utilize said time slot on the ISM-band when extensive interference exists locally in time, frequency or room, or within large parts of said frequency band.

9. Method according to patent claim 8, **characterized in that** the ISM-band both for DSSS and FHSS is divided into a number of frequency blocks which each corresponds to DECT's frequency division on the DECT-band of 1880-1900 MHz.

10. Method according to patent claim 9, **characterized in that** each frequency block is 20 MHz, by which four such frequency blocks are provided on the ISM-band.

11. Method according to patent claim 10, **characterized in that** for each transmitted DECT-frame a transfer of the used frequency block is made to just any one frequency channel according to an algorithm in DCA.

12. Method according to patent claim 11,
**characterized in that** a transfer of the frequency block is made to nearest higher frequency channel on the ISM-band.

13. Method according to patent claim 11,
**characterized in that** at said transfer all channels are renumbered in the frequency block so that a DECT-equipment for the most part handles the frequency block as if it were fixed in frequency, by which the dynamic channel allocation "DCA" can be retained within the frequency block.

14. Method according to patent claim 13,
**characterized in that** the frequency channel at said block transfer is supervised by the DCA, at which if a predetermined interference level is exceeded on this frequency channel, the DCA chooses a new frequency channel.

15. Method according to patent claim 14,
**characterized in that** the DCA chooses a frequency channel with lower frequency.

16. Method according to patent claim 14,
**characterized in that** frequency channels are systematically supervised by the DCA and if a multiple of consecutive channels have been registered with high interference level, the DCA attends to that the transmission between the base station and the portable is directly transferred to the 1,8 GHz-band, or allows the whole frequency block to move for instance one block length in the frequency plane on the ISM-band.

17. Method according to patent claim 16,
**characterized in that** the interference level is derived with regard to frequency or time.

18. Method according to patent claim 16,
**characterized in that** frequency ranges with a lot of disturbances are registered by the DCA as disturbance zones which are avoided during a predetermined period of time.

19. Method according to patent claim 18,
**characterized in that** an adjustable timer is used where the restricted period of time is a few seconds or a few minutes, which periods of time are typical for the duration of disturbances on the ISM-band.

## Patentansprüche

1. Verfahren zum Erhöhen der Übertragungskapazität in einem digitalen Kommunikationssystem wie z. B. DECT, das zusätzlich zum DECT-Band von 1880-1900 MHz gleichzeitig das ISM-Band von 2,4 GHz für die Übertragung von Information verwendet, und wobei ein Zeitschlitz in der Zeitschlitzstruktur des DECT eine spezielle Funktion erhält, die dazu führt, daß, wenn eine Basisstation bei einem Kanalabtasten den Zeitschlitz erreicht, ein Abtasten usw. innerhalb des ISM-Bandes beginnt und daß, wenn ein für DECT bestimmter dynamischer Kanalzuordnungsalgorithmus "DCA" die Benutzung dieses Zeitschlitzes wählt, die Basisstation und das tragbare Gerät sich dann für Übertragung auf dem ISM-Band umschalten, und wobei ein Zeitschlitz im ISM-Band in entsprechender Weise als Kommunikationsverbindung zum 1800 MHz-Band arbeitet, bei der, wenn der dynamische Kanalzuordnungsalgorithmus "DCA" die Verwendung dieses Zeitschlitzes wählt, die Basisstation und das tragbare Gerät sich auf Übertragung auf dem 1800 MHz-Band schalten.

2. Verfahren nach Anspruch 1, **dadurch gekennzeichnet, daß** das DCA es auswählt, den Zeitschlitz auf dem DECT-Band zu verwenden, wenn Kommunikation auf beiden Frequenzbändern durchgeführt werden soll.

3. Verfahren nach Anspruch 1, **dadurch gekennzeichnet, daß** der Zeitschlitz, der als Kommunikationsverbindung vom ISM-Band zum DECT-Band arbeitet, entweder virtuell oder real ist.

4. Verfahren nach Anspruch 1, **dadurch gekennzeichnet, daß** der Zeitschlitz, der als Kommunikationsverbindung vom DECT-Band vom ISM-Band wirkt, entweder virtuell oder real ist.

5. Verfahren nach Anspruch 1, **dadurch gekennzeichnet, daß** die Basisstation ein funkfester Teil "RFP" (Radio Fixed Part) ist.

6. Verfahren nach Anspruch 2, **dadurch gekennzeichnet, daß** die Kommunikation zwischen der Basisstation und dem tragbaren Gerät auf beiden Frequenzbändern zur selben Zeit während desselben Zeitrahmens durchgeführt wird.

7. Verfahren nach Anspruch 6, **dadurch gekennzeichnet, daß** für die Steuerung des Kommunikationsverkehrs durch das DCA dadurch gesorgt wird, daß der Datenverkehr normalerweise auf dem 2,4 GHz-Band und der Sprachverkehr auf dem 1,8 GHz-Band übertragen wird.

8. Verfahren nach Anspruch 2, **dadurch gekennzeichnet, daß** der dynamische Kanalzuordnungsalgorithmus "DCA" es auswählen kann, den Zeitschlitz auf dem ISM-Band zu verwenden, wenn übermäßige Störung lokal in der Zeit, Frequenz oder dem Raum oder innerhalb größerer Teil des Frequenzbandes existiert.

9. Verfahren nach Anspruch 8, **dadurch gekennzeichnet, daß** das ISM-Band sowohl für DSSS als auch FHSS in einer Anzahl von Frequenzblöcken aufgeteilt ist, die jeweils der Frequenzaufteilung von DECT auf dem DECT-Band von 1880-1900 MHz entsprechen.

10. Verfahren nach Anspruch 9, **dadurch gekennzeichnet, daß** jeder Frequenzblock 20 MHz ist, wodurch vier solche Frequenzblöcke auf dem ISM-Band vorgesehen sind.

11. Verfahren nach Anspruch 10, **dadurch gekennzeichnet, daß** für jeden gesendeten DECT-Datenblock eine Übertragung des benutzten Frequenzblocks zu gerade irgendeinem Frequenzkanal entsprechend dem Algorithmus in DCA durchgeführt wird.

12. Verfahren nach Anspruch 11, **dadurch gekennzeichnet, daß** eine Übertragung des Frequenzblocks zum nächsten Kanal höherer Frequenz auf dem ISM-Band durchgeführt wird.

13. Verfahren nach Anspruch 11, **dadurch gekennzeichnet, daß** bei der Übertragung alle Kanäle im Frequenzblock umnummeriert werden, so daß eine DECT-Ausrüstung zum größten Teil den Frequenzblock handhabt, als wenn er bezüglich seiner Frequenz fest ist, wodurch die dynamische Kanalzuordnung "DCA" innerhalb des Frequenzblocks beibehalten werden kann.

14. Verfahren nach Anspruch 13, **dadurch gekennzeichnet, daß** der Frequenzkanal bei der Blockübertragung durch die DCA überwacht wird, wobei, wenn ein vorbestimmter Störungspegel auf diesem Frequenzkanal überschritten wird, die DCA einen neuen Frequenzkanal wählt.

15. Verfahren nach Anspruch 14, **dadurch gekennzeichnet, daß** die DCA einen Frequenzkanal mit niedrigerer Frequenz wählt.

16. Verfahren nach Anspruch 14, **dadurch gekennzeichnet, daß** Frequenzkanäle systematisch durch die DCA überwacht werden und, falls ein Vielfaches von aufeinanderfolgenden Kanälen mit hohen Störungspegel registriert ist, die DCA dazu sorgt, daß die Übertragung zwischen der Basisstation und dem tragbaren Gerät direkt zum 1,8 GHz-Band übergeben wird, oder es dem gesamten Frequenzblock ermöglicht wird, sich z. B. eine Blocklänge in der Frequenzebene des ISM-Bandes zu bewegen.

17. Verfahren nach Anspruch 16, **dadurch gekennzeichnet, daß** der Störungspegel in Bezug auf die Frequenz oder die Zeit abgeleitet wird.

18. Verfahren nach Anspruch 16, **dadurch gekennzeichnet, daß** Frequenzbereiche mit einer Menge von Störungen durch die DCA als Störungszonen registriert werden, die während einer vorbestimmten Zeitdauer vermieden werden.

19. Verfahren nach Anspruch 18, **dadurch gekennzeichnet, daß** ein einstellbarer Zeitgeber benutzt wird, wo die eingeschränkte Zeitperiode einige wenige Sekunden oder wenige Minuten beträgt, welche Zeitperioden typisch für die Dauer von Störungen auf dem ISM-Band sind.

## Revendications

1. Méthode pour augmenter la capacité de transmission dans un système de communication numérique tel que DECT, qui, en plus de la bande DECT de 1880-1900 MHz, utilise en même temps la bandé ISM sur 2,4 GHz pour transmission d'informations, et une tranche de temps dans la structure de tranches de temps de DECT obtient une fonction spéciale qui résulte en ce que, lorsqu'une station de base lors d'un balayage de canal atteint la dite tranche de temps, un balayage commence dans la bande ISM et si un algorithme "DCA" d'affectation de canal dynamique prévu pour DECT choisit d'utiliser cette tranche de temps, alors la station de base et le portable se commutent pour transmission sur la bande ISM, et une tranche de temps dans la bande ISM fonctionne de façon correspondante comme liaison de communication vers la bande de 1800 MHz à laquelle, si l'algorithme "DCA" d'affectation de canal dynamique choisit d'utiliser cette tranche de temps, la station de base et le portable se commutent pour transmission sur la bande de 1800 MHz.

2. Méthode selon la revendication 1, **caractérisée en ce que** le DCA choisit d'utiliser la dite tranche de temps sur la bande DECT si la communication doit être effectuée sur les deux bandes de fréquence.

3. Méthode selon la revendication 1, **caractérisée en ce que** la tranche de temps qui fonctionne comme liaison de communication de la bande ISM à la bande DECT est virtuelle ou réelle.

4. Méthode selon la revendication 1, **caractérisée en ce que** la tranché de temps qui fonctionne comme liaison de communication de la bande DECT à la bande ISM est virtuelle ou réelle.

5. Méthode selon la revendication 1, **caractérisée en ce que** la station de base est un élément de radio fixe "RFP".

6. Méthode selon la revendication 2, **caractérisée en ce que** la communication entre station de base et portable est effectuée sur les deux bandes de fréquence en même temps, pendant la même tranche de temps.

7. Méthode selon la revendication 6, **caractérisée en ce qu'**une commande du trafic de communication est prise en charge par le DCA de sorte que le trafic de données est normalement transmis sur la bande de 2,4 GHz et le trafic vocal sur la bande de 1,8 GHz.

8. Méthode selon la revendication 2, **caractérisée en ce que** l'algorithme d'affectation de canal dynamique "DCA" peut choisir d'utiliser la dite tranche de temps sur la bande ISM lorsqu'une interférence importante existe localement dans le temps, la fréquence ou l'espace, ou dans de grandes parties de la dite bande de fréquence.

9. Méthode selon la revendication 8, **caractérisée en ce que** la bande ISM à la fois pour DSSS et FHSS est divisée en une pluralité de blocs de fréquence qui correspondent chacun à une division de fréquence de DECT sur la bande DECT de 1880 à 1900 MHz.

10. Méthode selon la revendication 9, **caractérisée en ce que** chaque bloc de fréquence est de 20 MHz, de sorte que quatre de ces blocs de fréquence sont prévus sur la bande ISM.

11. Méthode selon la revendication 10, **caractérisée en ce que**, pour chaque bloc DECT transmis, un transfert du bloc de fréquence utilisé est effectué vers juste un quelconque canal de fréquence conformément à un algorithme dans DCA.

12. Méthode selon la revendication 11, **caractérisée en ce qu'**un transfert du bloc de fréquence est effectué vers le canal de fréquence plus élevée le plus proche sur la bande ISM.

13. Méthode selon la revendication 11, **caractérisée en ce que**, lors du dit transfert, tous les canaux sont renumérotés dans le bloc de fréquence de sorte qu'un équipement DECT traite pour la plus grande partie le bloc de fréquence comme s'il était fixe en fréquence, et l'affectation de canal dynamique "DCA" peut ainsi être conservée à l'intérieur du bloc de fréquence.

14. Méthode selon la revendication 13, **caractérisée en ce que** le canal de fréquence au dit transfert de bloc est supervisé par le DCA, de sorte que, si un niveau d'interférence prédéterminé est dépassé sur ce canal de fréquence, le DCA choisit un nouveau canal de fréquence.

15. Méthode selon la revendicatioin 14, **caractérisée en ce que** le DCA choisit un canal de fréquence ayant une plus basse fréquence.

16. Méthode selon la revendication 14, **caractérisée en ce que** les canaux de fréquence sont systématiquement supervisés par le DCA et, si plusieurs canaux consécutifs ont été enregistrés avec un niveau élevé d'interférence, le DCA veille à ce que la transmission entre la station de base et le portable soit directement transférée à la bande de 1,8 GHz, ou bien il permet au bloc de fréquence complet de se deplacer par exemple d'une longueur de bloc dans le plan de fréquence sur la bande ISM.

17. Méthode selon la revendication 16, **caractérisée en ce que** le niveau d'interférence est établi en considération de la fréquence ou du temps.

18. Méthode selon la revendication 16, **caractérisée en ce que** les plages de fréquence ayant beaucoup de perturbations sont enregistrées par le DCA comme zones de perturbation qui sont évitées pendant une durée prédéterminée.

19. Méthode selon la revendication 18, **caractérisée en ce qu'**on utilise une minuterie réglable de sorte que la durée de restriction est de quelques secondes ou de quelques minutes, ces durées étant typiques de la durée des perturbations sur la bande ISM.
